# FASCICULE DE BREVET EUROPEEN

(11) **EP 1 195 557 B1**
(45) Date de publication et mention de la délivrance du brevet: **05.04.2006**
(21) Numéro de dépôt: 01402523.3
(22) Date de dépôt: 01.10.2001
(51) Int. Cl.: F23D 14/22, F23C 7/00, F23M 5/02

(54) **Brûleur tri-tubes pour fours notamment à verre et à métaux, et procédé d'injection de combustible et de comburant par un tel brûleur**
Dreirohrbrenner insbesondere für Glas- und Stahlschmelzöfen und Krafstoff- und Oxydationsmitteleinspritzverfahren in einem solchen Brenner
Three-tube burner especially for glass and steel furnaces and method to inject fuel and oxidant in such a burner

(30) Priorité: 03.10.2000 FR 0012599
(43) Date de publication de la demande: 10.04.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Rio, Laurent, 78000 Vesailles (FR); Legiret, Thierry, 78117 Toussus le Noble (FR); Fave, Jean-Christophe, 75014 Paris (FR)
(74) Mandataire: Vesin, Jacques

(56) Documents cités:
- EP-A- 0 850 883
- DE-B- 1 060 082
- US-A- 2 458 543
- US-A- 3 209 811
- US-A- 4 095 929
- US-A- 4 626 195
- US-A- 4 931 013

## Description

L'invention concerne les brûleurs tri-tubes adaptés pour produire une flamme à partir d'une injection centrale et d'une injection périphérique annulaire de comburant, et d'une injection annulaire de combustible entre l'injection centrale et l'injection périphérique annulaire de comburant, ainsi qu'un procédé d'injection de combustible et de comburant par un tel brûleur. De tels brûleurs tri-tubes sont connus à partir des documents US 3 209 811 et EP 0 850 883.

Des brûleurs tri-tubes sont utilisés notamment dans des fours à verre, et peuvent l'être également dans des fours à métaux, à la place des brûleurs bi-tubes, en vue de pouvoir contrôler l'atmosphère dans le four, augmenter l'impulsion de la flamme, ajuster la longueur de cette dernière en fonction de la géométrie du four (par exemple dans le cas de fours étroits), et modifier sa luminosité et notamment son spectre d'émission en fonction du type de matériau à élaborer dans le four, par exemple du type de verre.

A l'heure actuelle, la majorité des brûleurs à oxygène utilisés dans les fours à verre sont des brûleurs bi-tubes, dont le corps est équipé d'organes d'alimentation en comburant et d'organes d'alimentation en combustible.

Le remplacement des brûleurs bi-tubes par des brûleurs tri-tubes en vue d'obtenir les avantages mentionnés plus haut est problématique, car il devient alors nécessaire de gérer trois courants de fluide, ce qui augmente l'encombrement, et le nombre des conduits d'alimentation, et ainsi implique l'apport de modifications notables à l'installation destinée à alimenter le brûleur en fluides.

L'invention a pour but de remédier à ces inconvénients et concerne à cette fin un brûleur tri-tubes selon la revendication 1.

Grâce à cet agencement, lors du remplacement d'un brûleur bi-tubes par un brûleur tri-tubes, l'installation d'alimentation en fluides peut être ré-utilisée telle quelle, sans modfication, et il est en outre possible de régler avec précision la répartition du comburant entre les deux tubes d'amenée de celui-ci.

Le brûleur peut en outre présenter une ou plusieurs des caractéristiques suivantes :
- un tube d'amenée de comburant et le tube d'amenée de combustible sont logés dans un autre tube d'amenée de comburant ;
- les tubes d'amenée sont disposés coaxialement l'un autour de l'autre, sur au moins une partie de leur longueur ;
- la vanne de réglage est logée dans le brûleur, en étant insérée dans un tube d'amenée de comburant ;
- la vanne de réglage est une vanne à boisseau ;
- il comporte un tube d'amenée de comburant comportant une extrémité d'entrée de comburant ouverte à l'intérieur d'un autre tube d'amenée de comburant ;
- le fourreau comporte un canal dans lequel est logé un bouchon présentant un perçage calibré permettant un écoulement de comburant en direction de l'ouvreau avec un débit minimal prédéterminé ;
- le fourreau comporte un canal formant boisseau de vanne dans lequel est logée une clé de vanne pivotante présentant un perçage traversant et mobile d'une position dans laquelle le perçage traversant autorise un débit de comburant maximal à travers la vanne et ainsi un débit minimal à travers le tube central, à une position dans laquelle le perçage traversant interdit tout débit de comburant à travers la vanne et ainsi provoque un débit maximal à travers le tube central ;
- la vanne comporte un organe de manoeuvre permettant son actionnement en pivotement de manière manuelle ; et
- la vanne comporte un organe d'entraînement adapté pour être relié à un dispositif de motorisation.

L'invention concerne également un procédé d'injection de combustible et de comburant selon la revendication 6.

Le procédé peut en outre présenter une ou plusieurs des caractéristiques suivantes :
- on règle continûment la répartition du comburant entre les tubes d'amenée de comburant ;
- on règle manuellement la répartition du comburant entre les tubes d'amenée de comburant ;
- on règle de manière motorisée la répartition du comburant entre les tubes d'amenée de comburant ;
- on régule ou on asservit la répartition du comburant entre les tubes d'amenée de comburant.

D'autres caractéristiques et avantages de l'invention ressortiront de la description qui va suivre, d'une forme de réalisation de cette invention donnée à titre d'exemple non limitatif et illustrée par les dessins joints dans lesquels :
- la figure 1 est une coupe longitudinale schématique de profil d'un brûleur tri-tubes conventionnel,
- la figure 2 est une vue extérieure de profil d'un brûleur tri-tubes selon l'invention,
- la figure 3 est une coupe schématique du brûleur tri-tubes de la figure 2, par un plan III-III perpendiculaire au plan de projection de cette figure 2, et
- la figure 4 est une coupe schématique du brûleur des figures 2 et 3, par un plan IV-IV perpendiculaire à son axe central longitudinal .

Sur les figures, on a représenté schématiquement un brûleur Br dont une région d'extrémité est logée dans un ouvreau d'un bloc ouvreau Bo d'un four par exemple à verre.

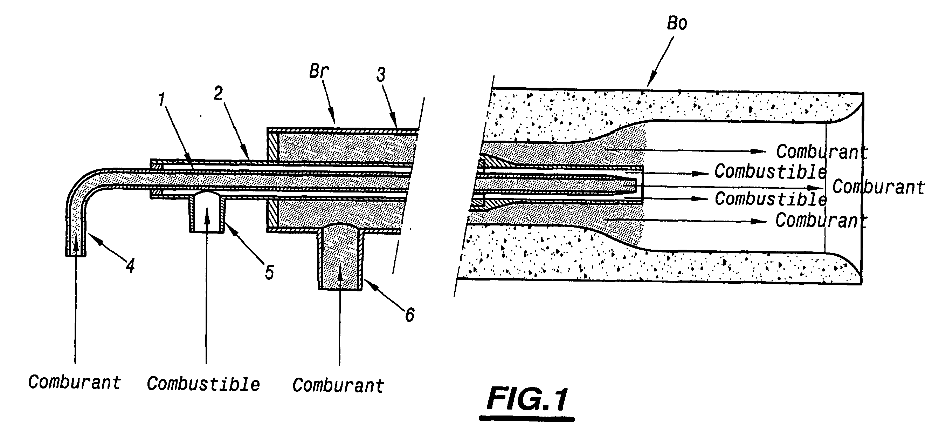

Plus précisément, sur la figure 1, sont montrés schématiquement la région d'extrémité d'un brûleur tri-tubes conventionnel logée dans l'ouvreau pour y produire une flamme s'étendant en saillie dans l'espace intérieur du four, et la région d'extrémité opposée du brûleur en saillie hors de l'ouvreau extérieurement au four par laquelle le brûleur est alimenté en combustible et en comburant.

Ce brûleur tri-tubes présente une structure générale coaxiale et comporte un tube central 1 d'amenée de comburant, un tube 2 d'amenée de combustible entourant le tube central et dont l'espace de circulation du combustible s'étend annulairement autour de ce tube central, et un troisième tube 3, extérieur, d'amenée de comburant, entourant le tube 2 d'amenée de combustible et dont l'espace de circulation du comburant s'étend annulairement autour de ce tube d'amenée de combustible. Les extrémités des trois tubes débouchant dans l'ouvreau sont prolongées chacune par une buse d'injection.

Les trois tubes 1, 2, 3 du brûleur tri-tubes conventionnel ne communiquent pas entre eux et sont alimentés séparément, chacun comportant un orifice d'entrée et étant équipé d'un court conduit d'entrée 4, 5, 6 débouchant dans cet orifice et relié soit à une alimentation en comburant, pour le tube central 1 et le tube extérieur 3, soit à une alimentation en combustible, pour le tube intermédiaire 2 ; chacun des conduits d'entrée 4, 5, 6 s'étend approximativement radialement par rapport à l'axe longitudinal central du brûleur autour duquel s'étendent les trois tubes.

Il faut donc gérer trois fluides, le brûleur est relativement volumineux, il est nécessaire d'utiliser trois flexibles d'alimentation, et les longueurs de tuyauterie à utiliser sont importantes.

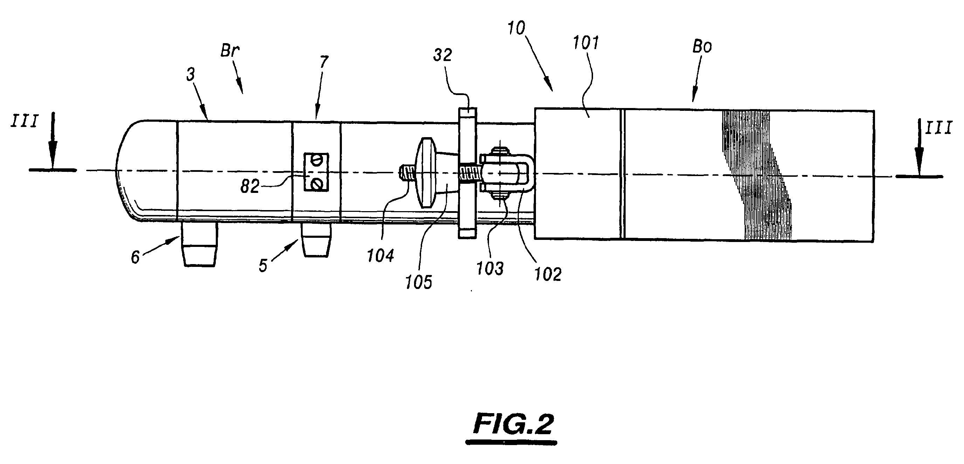

Le brûleur tri-tubes selon l'invention (figures 2 à 4), monté dans l'ouvreau comme le brûleur tri-tubes conventionnel, présente comme lui une structure générale coaxiale et comporte un tube central 1 d'amenée de comburant, un tube 2 d'amenée de combustible entourant le tube central et dont l'espace de circulation du combustible s'étend annulairement autour du tube central, et un troisième tube 3, extérieur, d'amenée de comburant, entourant le tube 2 d'amenée de combustible et dont l'espace de circulation du comburant s'étend annulairement autour de ce tube d'amenée de combustible, les extrémités des trois tubes débouchant dans l'ouvreau étant prolongées chacune par une buse d'injection. Ainsi, on fait circuler et on injecte le combustible dans l'ouvreau de manière annulaire autour d'un premier courant, central, de comburant, et à l'intérieur d'un deuxième courant, annulaire du même comburant.

Cependant, contrairement au brûleur tri-tubes conventionnel, les deux tubes 1, 3 d'amenée de comburant du brûleur selon l'invention communiquent l'un avec l'autre par leur extrémité opposée à la buse d'injection, le tube central 1 ayant cette extrémité opposée ouverte, à distance de l'extrémité correspondante fermée du tube extérieur 3.

Le tube extérieur 3 d'amenée de comburant comporte, à proximité de cette extrémité fermée, un orifice d'entrée 31, et est équipé d'un court conduit d'entrée 6 débouchant dans cet orifice et adapté pour être relié à une alimentation en comburant, ce conduit d'entrée 6 s'étendant approximativement radialement par rapport à l'axe longitudinal central du brûleur ; ainsi, le conduit d'entrée 6 pour l'alimentation en comburant est en communication à la fois avec le tube extérieur 3 et le tube central 1 dont l'extrémité ouverte est en aval du conduit 6 si l'on se réfère au sens d'écoulement du comburant dans le brûleur.

La région d'extrémité du tube 2 d'amenée de combustible opposée à la buse d'injection, qui est elle-même située en aval de l'extrémité ouverte du tube central 1 si l'on se réfère au sens d'écoulement du comburant, est logée dans un fourreau 7 annulaire dont la surface intérieure est ajustée sur une partie aval de sa longueur autour du tube intermédiaire 2, et sur une autre partie (amont) de sa longueur autour du tube central 1 d'amenée de comburant ; ces deux parties de la surface intérieure du fourreau sont reliées par un épaulement constituant un fond annulaire fermé pour le tube intermédiaire 2 ; le tube extérieur 3 comportant deux tronçons alignés s'étendant respectivement de part et d'autre du fourreau 7, la surface extérieure du fourreau comporte une région centrale cylindrique insérée entre ces deux tronçons et deux régions d'extrémité cylindriques de plus petit diamètre ajustées et insérées dans les extrémités en vis-à-vis de ces deux tronçons du tube extérieur.

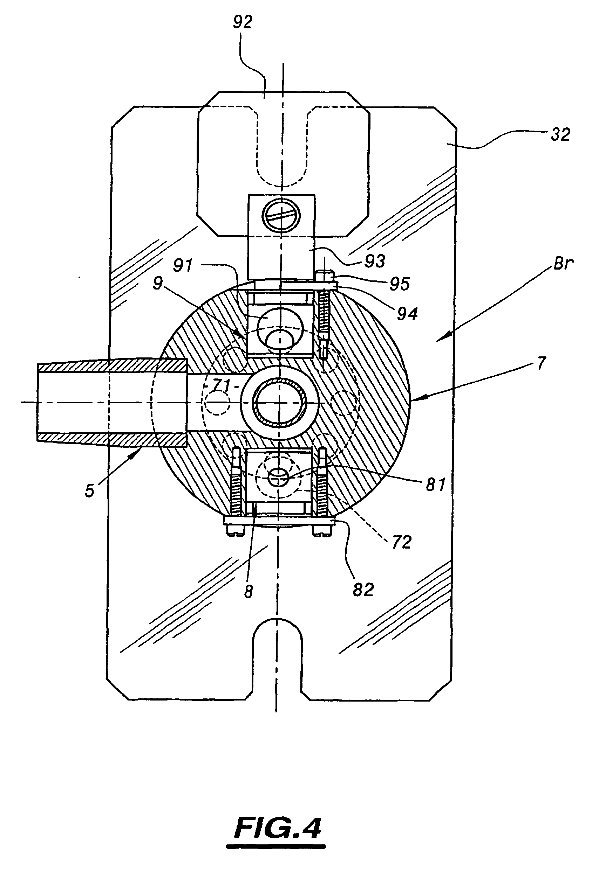

Le tube intermédiaire 2 d'amenée de combustible et le tube extérieur 3 d'amenée de comburant comportent en vis-à-vis des orifices respectifs de passage de combustible reliés par un canal 71 d'amenée de combustible (figure 4) creusé et s'étendant radialement dans le fourreau 7. L'orifice de passage de combustible du tube extérieur est équipé d'un court conduit d'entrée 5 adapté pour être relié à une alimentation en combustible ; ainsi, ce conduit d'entrée 5 pour l'alimentation en combustible est en communication à travers le fourreau 7 avec le tube intermédiaire 2 d'amenée de combustible.

Le fourreau 7 étant en aval du conduit d'entrée 6 de comburant, il est creusé longitudinalement de deux canaux 72, 73 parallèles à l'axe longitudinal central du brûleur, destinés à permettre l'écoulement du comburant en direction de la buse du tube extérieur 3 ; ces deux canaux longitudinaux 72, 73 sont centrés sur le diamètre du fourreau 7 qui est perpendiculaire au rayon le long duquel s'étend le canal 71 d'amenée de combustible, respectivement de part et d'autre de l'axe longitudinal central du brûleur, approximativement symétriquement

Le fourreau est en outre creusé de deux canaux de forme générale cylindrique le traversant radialement de sa surface intérieure à sa surface extérieure, le long du diamètre sur lequel sont centrés les deux canaux longitudinaux 72, 73, de manière que de chaque côté du fourreau 7 par rapport à l'axe longitudinal central du brûleur, un canal longitudinal 72, 73 débouche dans un canal radial.

L'un des deux canaux radiaux sert de logement à un bouchon interchangeable 8 ajusté dans ce canal, présentant un perçage 81 de petit diamètre parallèle à l'axe longitudinal central du brûleur pour assurer une communication entre les parties amont et aval du canal longitudinal 72. Ce perçage 81 est calibré comme on le verra dans la suite, et l'interchangeabilité des bouchons 8 permet de choisir le bouchon présentant le perçage de calibre désiré.

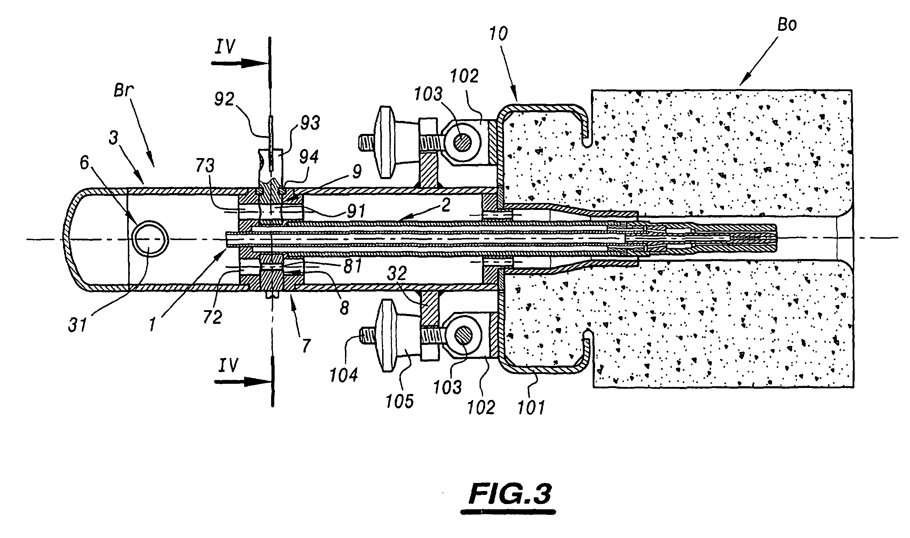

L'autre canal radial sert de boisseau à une clé de vanne pivotante 9 ajustée dans ce canal de telle manière que le fourreau 7 forme corps de vanne ; cette clé de vanne 9 présente un perçage 91 de diamètre notablement plus grand que celui des perçages 81 des bouchons interchangeables 8 et est mobile en pivotement autour de l'axe longitudinal du canal radial entre une position dans laquelle le perçage 91 est parallèle à l'axe longitudinal central du brûleur (figure 3) pour assurer une communication entre les parties amont et aval du canal longitudinal 72 et ainsi entre les deux tronçons du tube extérieur 3, et une position dans laquelle le perçage 91 est orthogonal à cet axe du brûleur et n'assure pas une telle communication. La clé 9 présente dans le canal radial une forme extérieure de révolution, et comporte hors du canal, extérieurement au tube extérieur du brûleur, un organe de manoeuvre 92 permettant son actionnement en pivotement de manière manuelle, ou un organe d'entraînement relié à un dispositif de motorisation permettant son actionnement en pivotement de manière motorisée, par exemple régulée ou asservie.

Sur le plan pratique, le bouchon interchangeable 8 peut présenter, également intérieurement au canal radial, une forme générale cylindrique, et, comporter hors du canal, une bride 82 de fixation par vis au fourreau.

La clé de vanne 9 peut présenter également intérieurement au canal radial, une forme générale cylindrique, et comporter hors du canal, une tige 93 à laquelle est fixé par vis l'organe de manoeuvre constitué par une ailette 92, le cylindre intérieur au canal radial et la tige 93 étant reliés par une gorge annulaire servant de logement aux branches latérales d'une plaquette de butée en U 94 fixée au fourreau 7 par une ou plusieurs vis 95 de fixation de la clé, vissées dans le fourreau 7 autour du canal radial et s'étendant parallèlement à celui-ci.

Pour la fixation du brûleur Br dans l'ouvreau creusé dans un bloc réfractaire Bo intégré dans la paroi du four, ce bloc-ouvreau Bo est équipé d'un support 10 de brûleur comportant une plaque d'ancrage 101 fixée à lui et qui est appliquée contre sa face extérieure au four. La plaque d'ancrage 101 comporte, en vis-à-vis de l'orifice de l'ouvreau débouchant à l'extérieur du four, une ouverture par laquelle le brûleur est inséré dans l'ouvreau de telle manière que, comme on l'a vu, sa région d'extrémité munie de buses d'injection produise une flamme s'étendant en saillie dans l'espace intérieur du four, et sa région d'extrémité opposée par laquelle il est adapté pour être alimenté en combustible et en comburant soit en saillie hors de l'ouvreau extérieurement au four. Le support 10 de brûleur est muni, respectivement de part et d'autre de l'ouverture pour le brûleur de la plaque d'ancrage 101, de deux dispositifs de fixation comportant chacun une chape 102 dont les branches portent un pivot 103 autour duquel est articulée une tige filetée 104 portant un écrou de serrage 105.

Pour coopérer avec ces dispositifs de fixation, le brûleur comporte une bride de fixation 32 s'étendant dans un plan perpendiculaire à son axe longitudinal central et qui est fixée, par exemple soudée ou brasée, au tube extérieur 3. Deux bords opposés de cette bride 32 comportent respectivement deux échancrures dans lesquelles pénètrent les deux tiges filetées articulées 104 du support 100 quand elles s'étendent parallèlement à l'axe longitudinal central du brûleur, et contre le pourtour desquelles on peut bloquer les écrous de serrage 105 pour fixer le brûleur au bloc ouvreau ; pour pouvoir retirer le brûleur de l'ouvreau, il suffit de desserrer les écrous 105 et de basculer les tiges filetées 104 de telle manière qu'elles se dégagent de l'emprise des échancrures de la bride 32.

Lorsque, le brûleur étant fixé dans l'ouvreau, l'entrée 6 de comburant est en communication avec une alimentation en comburant, il suffit de tourner la clé 9 de la vanne pour modifier la répartition du comburant entre les tubes central 1 et extérieur 3 d'amenée de comburant et régler cette répartition de la manière désirée. Plus précisément, le perçage calibré 81 du bouchon interchangeable 8 détermine le débit minimal dans le tube extérieur 3 d'amenée de comburant lorsque la vanne de réglage est fermée (perçage 91 de la clé 9 approximativement orthogonal à l'axe longitudinal central du brûleur) et l'on obtient alors le débit maximal dans le tube central 1 d'amenée de comburant. Au fur et à mesure que l'on ouvre la vanne, c'est-à-dire que le perçage 91 de la clé 9 est amené en alignement avec le canal 73 du fourreau 7, la perte de charge diminuant dans le tube extérieur 3, le débit augmente dans celui-ci jusqu'à une valeur maximale, et diminue dans le tube central 1 jusqu'à une valeur minimale. La gestion de la perte de charge dans le tube extérieur 3 permet donc le réglage de la répartition du comburant entre les deux tubes 1, 3 d'amenée de comburant.

On a ainsi la possibilité de régler continûment la répartition du comburant entre les tubes 1, 3 montés en dérivation l'un par rapport à l'autre, et, en particulier lorsque la vanne est motorisée, on peut agir sur celle-ci à tout moment pour réguler la répartition ou pour l'asservir en fonction des besoins.

L'interchangeabilité du bouchon 8 permet d'élargir la gamme de débits de comburant, dans la mesure où l'on possède une gamme de bouchons 8 ayant des perçages 81 de différentes sections.

## Revendications

1. Brûleur tri-tubes pour four, adapté pour être solidarisé à un ouvreau de four de telle manière qu'au moins une région d'extrémité du brûleur (Br) soit logée dans l'ouvreau pour y produire une flamme s'étendant en saillie dans l'espace intérieur du four, comportant : une entrée (5) pour un combustible et un tube (2) d'amenée de combustible relié à cette entrée de combustible, une entrée (6) pour un comburant et, disposés coaxialement sur au moins une partie de leur longueur, un tube central (1) d'amenée de comburant, un tube (2) d'amenée de combustible définissant un espace annulaire de circulation de combustible autour du tube central, un tube extérieur (3) d'amenée de comburant définissant un espace annulaire de circulation de comburant autour du tube d'amenée de combustible, brûleur **caractérisé en ce qu'**il comporte un fourreau (7) annulaire inséré dans l'espace annulaire de circulation de comburant entre le tube (2) d'amenée de combustible et le tube extérieur (3) d'amenée de comburant, en aval d'une extrémité du tube central (1) ouverte dans le tube extérieur et également en aval du conduit (6) d'entrée pour le comburant, ce fourreau (7) comportant d'une part un canal (73) permettant l'écoulement du comburant en direction de l'ouvreau et d'autre part un organe mobile (9) coopérant avec lui pour former une vanne de réglage (7, 9).

2. Brûleur selon la revendication 1, **caractérisé en ce que** le fourreau (7) comporte un canal dans lequel est logé un bouchon (8) présentant un perçage calibré (81) permettant un écoulement de comburant en direction de l'ouvreau avec un débit minimal prédéterminé.

3. Brûleur selon l'une quelconque des revendications 1 ou 2, **caractérisé en ce que** le fourreau (7) comporte un canal formant boisseau de vanne dans lequel est logée une clé de vanne pivotante (9) présentant un perçage (91) traversant et mobile d'une position dans laquelle le perçage traversant (91) autorise un débit de comburant maximal à travers la vanne et ainsi un débit minimal à travers le tube central (1), à une position dans laquelle le perçage traversant (91) interdit tout débit de comburant à travers la vanne et ainsi provoque un débit maximal à travers le tube central (1).

4. Brûleur selon l'une quelconque des revendications 1 à 3, **caractérisé en ce que** la vanne comporte un organe de manoeuvre (92) permettant son actionnement en pivotement de manière manuelle.

5. Brûleur selon l'une quelconque des revendications 1 à 4, **caractérisé en ce que** la vanne comporte un organe d'entraînement adapté pour être relié à un dispositif de motorisation.

6. Procédé d'injection de combustible et de comburant dans un ouvreau de four au moyen d'un brûleur (Br) selon l'une quelconque des revendications précédentes, pour produire une flamme s'étendant en saillie dans l'espace intérieur du four, **caractérisé en ce que** l'on introduit dans le brûleur un comburant par une première entrée (6) et un combustible par une deuxième entrée (5), et on fait circuler le comburant issu de la première entrée vers l'ouvreau à travers au moins deux tubes (1, 3) d'amenée de comburant montés en dérivation l'un par rapport à l'autre, tandis que l'on fait circuler le combustible issu de la deuxième entrée vers l'ouvreau à travers un autre tube (2), d'amenée de combustible.

7. Procédé selon la revendication 6, **caractérisé en ce que** l'on règle continûment la répartition du comburant entre les tubes (1, 3) d'amenée de comburant.

8. Procédé selon l'une quelconque des revendications 6 et 7, **caractérisé en ce que** l'on règle manuellement la répartition du comburant entre les tubes (1, 3) d'amenée de comburant.

9. Procédé selon l'une quelconque des revendications 6 et 8, **caractérisé en ce que** l'on règle de manière motorisée la répartition du comburant entre les tubes (1, 3) d'amenée de comburant.

10. Procédé selon la revendication 9, **caractérisé en ce que** l'on régule ou on asservit la répartition du comburant entre les tubes (1, 3) d'amenée de comburant.

11. Procédé selon l'une quelconque des revendications 6 à 10, **caractérisé en ce que** l'on fait circuler et l'on injecte le combustible dans l'ouvreau de manière annulaire autour d'un premier courant, central, de comburant, et à l'intérieur d'un deuxième courant, annulaire, du même comburant.

## Claims

1. Three-tube burner for a furnace, designed to be fastened to a furnace quarl in such a way that at least one end region of the burner (Br) is housed in the quarl in order to produce therein a flame projecting into the internal space of the furnace, comprising an inlet (5) for a fuel and a fuel feed tube (2) connected to this fuel inlet, an inlet (6) for an oxidizer and, coaxially arranged over at least part of their length, a central oxidizer feed tube (1), a fuel feed tube (2) defining an annular space for flow of fuel around the central tube, an outer oxidizer feed tube (3) defining an annular space for flow of oxidizer around the fuel feed tube, the said burner being **characterized in that** it comprises an annular bush (7) inserted into the annular space for flow of oxidizer between the fuel feed tube (2) and the outer oxidizer feed tube (3), downstream of an open end of the central tube (1) in the outer tube and also downstream of the inlet duct (6) for the oxidizer, this bush (7) having, on the one hand, a channel (73) allowing the oxidizer to flow towards the quarl and, on the other hand, a movable member (9) cooperating with the channel to form a control valve, (7, 9).

2. Burner according to Claim 1, **characterized in that** the bush (7) has a channel in which a plug (8) is housed, the said plug having a calibrated hole (81) allowing the oxidizer to flow towards the quarl with a predetermined minimum flow rate.

3. Burner according to either of Claims 1 and 2, **characterized in that** the bush (7) has a channel forming a plug valve in which a pivoting valve key (9) is housed, the said key having a through-hole (91) and able to move from a position in which the through-hole (91) allows the oxidizer to flow with the maximum flow rate through the valve and thus with the minimum flow rate through the central tube (1) to a position in which the through-hole (91) prevents any flow of oxidizer through the valve and thus causes flow with the maximum flow rate through the central tube (1).

4. Burner according to any one of Claims 1 to 3, **characterized in that** the valve includes an operating member (92) allowing it to pivot manually.

5. Burner according to any one of Claims 1 to 4, **characterized in that** the valve includes a driving member designed to be connected to a motor-drive device.

6. Method of injecting fuel and oxidizer into a furnace quarl by means of a burner (Br) according to any one of the preceding claims for producing a flame projecting into the internal space of the furnace, **characterized in that** an oxidizer is introduced into the burner via a first inlet (6) and a fuel is introduced via a second inlet (5), the fuel coming from the first inlet flows towards the quarl through at least two oxidizer feed tubes (1, 3) mounted in parallel one with respect to the other, while the fuel coming from the second inlet flows towards the quarl through another fuel feed tube (2).

7. Method according to Claim 6, **characterized in that** the distribution of the oxidizer between the oxidizer feed tubes (1, 3) is continuously adjusted.

8. Method according to either of Claims 6 and 7, **characterized in that** the distribution of the oxidizer between the oxidizer feed tubes (1, 3) is adjusted manually.

9. Method according to either of Claims 6 and 8, **characterized in that** the distribution of the oxidizer between the oxidizer feed tubes (1, 3) is adjusted in a motor-driven manner.

10. Method according to Claim 9, **characterized in that** the distribution of the oxidizer between the oxidizer feed tubes (1, 3) is regulated or controlled.

11. Method according to any one of Claims 6 to 10, **characterized in that** the fuel flows towards and is injected into the quarl in an annular manner around a first, central, stream of oxidizer and within a second, annular, stream of the same oxidizer.

## Patentansprüche

1. Dreirohrbrenner für Ofen, der angepasst ist, um fest mit einem Ofentunnel so verbunden zu werden, dass mindestens eine Endregion des Brenners (Br) in dem Tunnel aufgenommen ist, um dort eine Flamme zu erzeugen, die sich in den Innenraum des Ofens vorragend erstreckt, umfassend: einen Eingang (5) für einen Brennstoff und ein Rohr (2) zum Zuführen von Brennstoff, das mit diesem Brennstoffeingang verbunden ist, einen Eingang (6) für einen Sauerstoffträger und, koaxial auf mindestens einem Teil ihrer Länge angeordnet ein zentrales Rohr (1) zum Zuführen von Sauerstoffträger, ein Rohr (2) zum Zuführen von Brennstoff, das einen Ringraum zum Zirkulieren von Brennstoff um das zentrale Rohr definiert, ein Außenrohr (3) zum Zuführen von Sauerstoffträger, das einen Ringraum zum Zirkulieren von Sauerstoffträger um das Rohr zum Zuführen von Brennstoff definiert, wobei der Brenner **dadurch gekennzeichnet ist, dass** er einen ringförmigen Mantel (7) aufweist, der in den Ringraum zum Zirkulieren des Sauerstoffträgers zwischen dem Rohr (2) zum Zuführen von Brennstoff und dem Außenrohr (3) zum Zuführen von Sauerstoffträger stromabwärts eines Endes des zentralen Rohrs (1), das in dem Außenrohr offen ist und auch stromabwärts der Eingangsleitung (6) für den Sauerstoffträger eingefügt ist, wobei dieser Mantel (7) einerseits einen Kanal (73), der das Abfließen des Sauerstoffträgers in Richtung des Tunnels erlaubt, und andererseits ein mobiles Organ (9), das mit ihm zusammenwirkt, um ein Regelventil (7, 9) zu bilden, aufweist.

2. Brenner nach Anspruch 1, **dadurch gekennzeichnet, dass** der Mantel (7) einen Kanal aufweist, in dem ein Stopfen (8) aufgenommen ist, der eine kalibrierte Bohrung (81) aufweist, die ein Abfließen von Sauerstoffträger in Richtung des Tunnels mit einem vorbestimmten Mindestdurchfluss erlaubt.

3. Brenner nach einem der Ansprüche 1 oder 2, **dadurch gekennzeichnet, dass** der Mantel (7) einen Kanal aufweist, der einen Ventilkegel bildet, in dem ein schwenkender Ventilschlüssel (9) aufgenommen ist, der eine durchgehende Bohrung (91) aufweist und von einer Position, in der die durchgehende Bohrung (91) einen maximalen Durchfluss von Sauerstoffträger durch das Ventil gestattet und daher einen minimalen Durchfluss durch das zentrale Rohr (1) zu einer Position beweglich ist, in der die durchgehende Bohrung (91) jeden Durchfluss von Sauerstoffträger durch das Ventil untersagt und daher einen maximalen Durchfluss durch das zentrale Rohr (1) bewirkt.

4. Brenner nach einem der Ansprüche 1 bis 3, **dadurch gekennzeichnet, dass** das Ventil ein Handhabungsorgan (92) aufweist, das sein Betätigen unter manuellem Schwenken erlaubt.

5. Brenner nach einem der Ansprüche 1 bis 4, **dadurch gekennzeichnet, dass** das Ventil ein Antriebsorgan aufweist, das mit einer Antriebsvorrichtung verbunden werden kann.

6. Einspritzverfahren von Brennstoff und Sauerstoffträger in einen Ofentunnel mittels eines Brenners (Br) gemäß einem der vorhergehenden Ansprüche, um eine Flamme zu erzeugen, die sich in den Innenraum des Ofens vorragend erstreckt, **dadurch gekennzeichnet, dass** man in den Brenner einen Sauerstoffträger durch einen ersten Eingang (6) und einen Brennstoff durch einen zweiten Eingang (5) einführt und man den Sauerstoffträger, der aus dem ersten Eingang stammt, zu dem Tunnel durch mindestens zwei Rohre (1, 3) zum Zuführen von Sauerstoffträger zirkulieren lässt, die in Abzweigung zueinander installiert sind, während man den Brennstoff, der aus dem zweiten Eingang zu dem Tunnel stammt, durch ein anderes Rohr (2) zum Zuführen von Brennstoff zirkulieren lässt.

7. Einspritzverfahren nach Anspruch 6, **dadurch gekennzeichnet, dass** man die Verteilung des Sauerstoffträgers zwischen den Rohren (1, 3) zum Zuführen von Sauerstoffträger ununterbrochen regelt.

8. Einspritzverfahren nach einem der Ansprüche 6 und 7, **dadurch gekennzeichnet, dass** man die Verteilung des Sauerstoffträgers auf die Rohre (1, 3) zum Zuführen von Sauerstoffträger manuell regelt.

9. Einspritzverfahren nach einem der Ansprüche 6 und 8, **dadurch gekennzeichnet, dass** man die Verteilung des Sauerstoffträgers auf die Rohre (1, 3) zum Zuführen von Sauerstoffträger durch Motorantrieb regelt.

10. Einspritzverfahren nach Anspruch 9, **dadurch gekennzeichnet, dass** man die Verteilung des Sauerstoffträgers auf die Rohre (1, 3) zum Zuführen von Sauerstoffträger reguliert oder steuert.

11. Einspritzverfahren nach einem der Ansprüche 6 bis 10, **dadurch gekennzeichnet, dass** man den Brennstoff zirkulieren lässt und in den Tunnel ringförmig um einen ersten zentralen Strom von Sauerstoffträger und im Inneren eines zweiten ringförmigen Stroms des gleichen Sauerstoffträgers einspritzt.
